# EUROPEAN PATENT SPECIFICATION

(11) **EP 3 807 090 B1**
(45) Date of publication and mention of the grant of the patent: **24.01.2024**
(21) Application number: 19729779.9
(22) Date of filing: 17.06.2019
(51) Int. Cl.: C08L 81/06, B29C 64/118, B33Y 70/00

(54) **METHOD FOR MANUFACTURING A THREE-DIMENSIONAL OBJECT USING A POLY(ARYL ETHER SULFONE) POLYMER AND A PER(HALO)FLUOROPOLYMER**
VERFAHREN ZUR HERSTELLUNG EINES DREIDIMENSIONALEN OBJEKTS UNTER VERWENDUNG EINES POLY(ARYLETHERSULFON)-POLYMERS UND EINES PER(HALO)FLUOROPOLYMERS
PROCÉDÉ DE FABRICATION D'UN OBJET TRIDIMENSIONNEL UTILISANT UN POLYMÈRE POLY(ARYL ETHER SULFONE) ET UN PAR(HALO)FLUOROPOLYMÈRE

(30) Priority: 18.06.2018 US 201862686298 P; 16.07.2018 EP 18183814
(43) Date of publication of application: 21.04.2021
(73) Proprietor: Solvay Specialty Polymers USA, LLC., Alpharetta, GA 30005-3914 (US)
(72) Inventor: JEOL, Stéphane, Cumming, GA 30041 (US); HAMMONDS, Ryan, Atlanta, GA 30360 (US); SINGLETARY, Nancy J., Alpharetta, GA 30004 (US); NORFOLK, Linda M., Cumming, GA 30041 (US)
(74) Representative: Benvenuti, Federica
(86) International application number: PCT/EP2019/065803
(87) International publication number: WO 2019/243217

(56) References cited:
- EP-A1- 0 535 785
- WO-A1-2014/037374
- WO-A1-2018/049365
- WO-A1-2018/077967
- US-A1- 2011 213 086

## Description

### Technical Field

The present disclosure relates to a method for manufacturing a three-dimensional (3D) object with an additive manufacturing system, comprising a step consisting in printing layers of the three-dimensional object from the part material comprising at least one poly(aryl ether sulfone) (PAES) polymer and at least one per(halo)fluoropolymer (FP), having a melt viscosity measured according to ASTM D3835, at 372°C and 1000 s⁻¹, using a using a Hastelloy die of 1 mm × 10 mm, of at most 1.5×10³ Pa.s. The present invention also relates to polymeric filaments comprising such a PAES and FP, as well as to the use of this PAES to prepare filaments and to print 3D objects.

### Background Art

Additive manufacturing systems are used to print or otherwise build 3D parts from digital representations of the 3D parts using one or more additive manufacturing techniques. Examples of commercially available additive manufacturing techniques include extrusion-based techniques, selective laser sintering, powder/binder jetting, electron-beam melting and stereolithography processes. For each of these techniques, the digital representation of the 3D part is initially sliced into multiple horizontal layers. For each sliced layer, a tool path is then generated, which provides instructions for the particular additive manufacturing system to print the given layer.

For example, in an extrusion-based additive manufacturing system, a 3D part may be printed from a digital representation of the 3D part in a layer-by-layer manner by extruding and adjoining strips of a part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a 3D part resembling the digital representation. An example of extrusion-based additive manufacturing system starting from filaments is called Fused Filament Fabrication (FFF). Pellet Additive Manufacturing (PAM) is an example of a 3D printing method capable of printing raw materials as pellets.

As another example, in a powder-based additive manufacturing system, a powerful laser is used to locally sinter powder into a solid part. A 3D part is created by sequentially depositing a layer of powder followed by a laser pattern to sinter an image onto that layer. An example of powder-based additive manufacturing system starting from powder is called Selective Laser Sintering (SLS).

Multi jet fusion ("MJP") is another example of an additive manufacturing printing method. During multi jet fusion, the entire layer of the powdered material is exposed to radiation, but only a selected region is fused and hardened to become a layer of a 3D object. The MJP method makes use of a fusing agent, which has been selectively deposited in contact with the selected region of the powdered material. The fusing agent is capable of penetrating into the layer of the powdered material and spreading onto the exterior surface of the powdered material. The fusing agent is capable of absorbing radiation and converting the absorbed radiation to thermal energy, which in turn melts or sinters the powdered material that is in contact with the fusing agent. This causes the powdered material to fuse, bind, cure, in order to form a layer of the 3D object.

As another example yet, carbon-fiber composites 3D part can be prepared using the continuous Fiber-Reinforced Thermosplastic (FRTP) printing method. The printing is based on fused-deposition modeling (FDM) and combines fibers and resin in a nozzle.

A recognized need in the art of additive manufacture (AM) of thermoplastic-based materials is a selection of improved materials that can be robustly processed by an AM technology, as those described above, to yield functional parts exhibiting specific design and custom features accessible with AM simultaneously with the satisfactory mechanical and appearance properties expected from more conventional fabrication technologies such as injection molding.

The present invention is based on the need for additive manufacturing materials to be used for 3D printing parts or articles for aerospace applications having several technical requirements, notably low heat release, low smoke generation and low toxic gas emissions.

D1 (WO 2018/077967 A1 - Solvay) relates to a multi-layer laminate assembly composition and to the use thereof for the preparation of window shades and other body panels for use in vehicles, e.g., airplanes, trains, buses or the like. D2 (WO 2014/037374 A1 - Solvay) relates to PAEK-based polymer compositions which are very useful for the manufacture of thin films and wire coatings and a process for the manufacturing of said compositions. D3 (US 2011/213086 A1 - Sumitomo) relates to a thermoplastic resin composition comprising a polysulfone(A) having oxygen-containing groups selected from among hydroxyl groups and oxyanion groups, a fluororesin(B) and a thermoplastic resin (C), such as LCP. D4 (EP 0 535 785 A1, Amoco 1992) relates to flame retardant blends of polysulfone (PSU), with polyalkylene phthalate. D5 (WO 2018/049365 A1) (SABIC) relates to an additive manufacturing process for preparing a workpiece including a build material and a sacrificial material which can be removed from the build material by exposing the workpiece to water of at least 85°C. The build portion comprises polyetherimide, polyetherimidesulfone, polyimide, polysulfone, polyethersulfone, polyphenylene ether sulfone, polyphenylene ether, imidized polymethacrylate, blends thereof or any combination. This document also describes the use of polytetrafluoroethylene (PTFE) as an anti-drip agent, as well as fibular PTFE to enhance the melt strength.

### Summary of invention

An aspect of the present invention is directed to a method for manufacturing a three-dimensional (3D) object with an additive manufacturing system, comprising a step consisting in printing layers of the 3D object from the part material comprising at least one poly(aryl ether sulfone) (PAES) polymer and at least one per(halo)fluoropolymer (FP), having a melt viscosity measured according to ASTM D3835, at 372°C and 1000 s⁻¹, using a using a Hastelloy die of 1 mm × 10 mm, of at most 1.5×10³ Pa.s.

The 3D objects or articles obtainable by such method of manufacture can be used in a variety of final applications. Mention can be made in particular of aircraft parts and complex shaped parts in the aerospace industry, as well as implantable device, dental prostheses, brackets and under-the-hood parts in the automotive industry.

According to an embodiment, the method also includes the extrusion of the part material, with an extrusion-based additive manufacturing system. The part material may be shaped in the form of a filament and used for example in a fused filament fabrication technique (FFF). The part material may also be in the form of pellets and be used in a 3D printing technology capable of printing raw materials as pellets (PAM).

Another aspect of the disclosure is directed to a part material, for example in the form of a filament or pellets ready for 3D printing, said material comprising at least one poly(aryl ether sulfone) (PAES) polymer and at least one per(halo)fluoropolymer (FP), having a melt viscosity measured according to ASTM D3835, at 372°C and 1000 s⁻¹, using a using a Hastelloy die of 1 mm × 10 mm, of at most 1.5×10³ Pa.s. Compositions, pellets and filaments described in the present application are particularly well-suited for 3D printing parts for the aerospace market which requires low heat release, low smoke generation and low toxic gas emissions.

Another aspect yet of the present disclosure is directed to the use of the herein described part material for the manufacture of three-dimensional objects or for the manufacture of AM-ready pellets or filaments for use in the manufacture of three-dimensional objects using an additive manufacturing system, for example FFF, PAM, SLS, MJF or FRTP printing methods.

The applicant has found that the use of a poly(aryl ether sulfone) (PAES) polymer and a fluoropolymer having a low melt viscosity for 3D printing an object, allows the manufacture of 3D objects presenting an improved surface aspect and sufficient mechanical properties, in comparison to injection-molded parts.

### Description of embodiments

The present disclosure relates to a method of making or manufacturing a three-dimensional (3D) object using an additive manufacturing system, such as an extrusion-based additive manufacturing system (for example FFF), a powder-based additive manufacturing system (for example SLS) or a continuous Fiber-Reinforced Thermosplastic (FRTP) printing method.

The method of the present disclosure comprises the step of printing layers of the 3D object from the part material comprising a polymeric component comprising at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm.

According to an embodiment, the method of the present disclosure comprises the step of extruding a part material in the form of a filament, the filament comprising a polymeric component which comprises at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, in order to print layers of the 3D object from the part material.

According to another embodiment, the method of the present disclosure comprises the step of extruding a part material in the form of pellets, the pellets comprising a polymeric component which comprises at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, in order to print layers of the 3D object from the part material.

According to an embodiment, the method of the present disclosure comprises the step of selectively sintering a part material in the form of a powder material, the powder material comprising a polymeric component which comprises at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, in order to print layers of the 3D object from the part material. In this case, the powder can have a regular shape such as a spherical shape, or a complex shape obtained by grinding/milling of pellets or coarse powder.

The merit of the applicant has been to surprisingly identify a combination of a sulfone polymer and a fluoropolymer of a low melt viscosity, which allows the manufacture of 3D objects by 3D printing having improved surface aspect and sufficient mechanical properties in comparison to injection-molded objects, while at the same time lowering the processing temperature to prepare filaments of material and printed parts.

It is generally known and described in the literature that materials used for FFF or FDM must have a melt viscosity as low as possible in order to be extruded in a continuous way at the extrusion temperature. Also the melt viscosity of the polymers must be low enough so that deposited filaments lay flat rather than curl up. Melt viscosity can be lowered by increasing the temperature at which the material is extruded, but a too high temperature can cause heated material to decompose and increases energy consumption. Polymers of low melt viscosity must not only provide 3D printed articles presenting sufficient mechanical properties, but they must also be easily processable into filaments materials when they are used in extrusion-based 3D printing methods.

The temperature used for preparing the polymeric filaments of low melt viscosity can advantageously be reduced, as well as the temperature set up for printing the 3D objects, which positively impacts the energy consumption and broaden the range of printers which can be used.

The Applicant hereby shows that the combination of a sulfone polymer and a fluoropolymer of low melt viscosity allows to significantly lower the extrusion temperature used to prepare FFF filaments. The Applicant also shows that the printing properties of the material are maintained, while at the same time improving the surface appearance of the final article.

The expressions "(co)polymer" or "polymer" are hereby used to designate homopolymers containing substantially 100 mol.% of the same recurring units and copolymers comprising at least 50 mol.% of the same recurring units, for example at least about 60 mol.%, at least about 65 mol.%, at least about 70 mol.%, at least about 75 mol.%, at least about 80 mol.%, at least about 85 mol.%, at least about 90 mol.%, at least about 95 mol.% or at least about 98 mol.%.

The expression "part material" hereby refers to a blend of material, notably polymeric compounds, intended to form at least a part of the 3D object. The part material is according to the present disclosure used as feedstocks to be used for the manufacture of 3D objects or part of 3D objects.

The method of the present disclosure indeed employs a PAES polymer (also called sulfone polymer), which can be the main element of the part material and which can for example be used as pellets or alternatively be shaped in the form of a filament or microparticles (with a regular shape such as spheres, or with a complex shape obtained by grinding/milling of pellets), to build a 3D object (e.g. a 3D model, a 3D article or a 3D part). The method of the present invention also employs a per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm. The FP polymer can be in the form of a micropowder.

In the present application:
- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

According to an embodiment, the part material is in the form of a filament. The expression "filament" refers to a thread-like object or fiber formed of a material or blend of materials which according to the present disclosure comprises at least a PAES polymer and at least one FP of specific Mw.

The filament may have a cylindrical or substantially cylindrical geometry, or may have a non-cylindrical geometry, such as a ribbon filament geometry; further, filament may have a hollow geometry, or may have a core-shell geometry, with another polymeric composition, being used to form either the core or the shell.

According to another embodiment, the part material is in the form of microparticles or in powder form, for example having a size comprised between 1 and 200 µm, for example between 10 and 100 µm or between 20 and 80 µm, for example for being fed through a blade, a roll or an auger-pump print head.

According to an embodiment of the disclosure, the method of manufacturing a three-dimensional object using an additive manufacturing system comprises a step consisting in extruding the part material. This step may for example occurs when printing or depositing strips or layers of part material. The method of making 3D objects using an extrusion-based additive manufacturing system is also known as fused filament fabrication technique (FFF).

FFF 3D printers are, for example, commercially available from Apium, from Hyrel, from Roboze, from NVBots, from AON3D or from Stratasys, Inc. (under the trade name Fortus^{®}).

PAM 3D printers are, for example, commercially available from Pollen. BAAM (Big Area Additive Manufacturing) is an industrial sized, additive machine commercially available from Cincinnati Inc.

SLS 3D printers are, for example, available from EOS Corporation under the trade name EOSINT^{®}P.

MJF 3D printers are, for example, available from Hewlett-Packard Company under the trade name HP Jet Fusion 3D.

FRTP 3D printers are, for example, available from Markforged.

### Part material

The part material employed in the method of the present disclosure comprises at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm.

The part material of the invention may include other components. For example the part material may comprise at least one additive, notably at least one additive selected from the group consisting of fillers, colorants, lubricants, plasticizers, stabilizers, flame retardants, nucleating agents, flow enhancers and combinations thereof. Fillers in this context can be reinforcing or non-reinforcing in nature.

The part material may for example comprise up to 30 wt.% of at least one additive, based on the total weight of the part material.

According to an embodiment of the present invention, the part material comprises from 0.01 to 10 wt.%, preferably from 0.05 to 5 wt.%, more preferably from 0.25 to 1 wt.% of at least one additive, for example two or three additives as defined above.

In embodiments that include fillers (F), the concentration of the fillers in the part material ranges from 0.1 wt.% to 30 wt.%, preferentially from 0.5 to 25 wt.%, even more preferentially from 1 to 20 wt.% with respect to the total weight of the part material. Suitable fillers include calcium carbonate, magnesium carbonate, glass fibers, graphite, carbon black, carbon fibers, carbon nanotubes, graphene, graphene oxide, fullerenes, talc, wollastonite, mica, alumina, silica, titanium dioxide, kaolin, silicon carbide, zirconium tungstate, boron nitride and combinations thereof.

According to an embodiment of the present invention, the part material comprises from 0.01 to 10 wt.%, preferably from 0.05 to 5 wt.%, more preferably from 0.25 to 1 wt.% of fillers, for example selected from the group consisting of include calcium carbonate, magnesium carbonate, glass fibers, graphite, carbon black, carbon fibers, carbon nanotubes, graphene, graphene oxide, fullerenes, talc, wollastonite, mica, alumina, silica, titanium dioxide, kaolin, silicon carbide, zirconium tungstate, boron nitride and combinations thereof.

According to an embodiment of the present invention, the part material of the present invention comprises flame retardants such as halogen and halogen free flame retardants, such as zinc borate.

According to another embodiment of the present invention, the part material comprises at least one additive selected from the group consisting of hydroxyapatite, α-tricalcium phosphate (α-TCP), β-TCP and barium sulfate (BaSO₄).

According to another embodiment of the present invention, the part material of the present invention comprises a flow agent, also called sometimes flow aid. This flow agent may for example be hydrophilic. Examples of hydrophilic flow aids are inorganic pigments notably selected from the group consisting of silicas, aluminas and titanium oxide. Mention can be made of fumed silica.

Fumed silicas are commercially available under the trade name Aerosil^{®} (Evonik) and Cab-O-Sil^{®} (Cabot).

According to an embodiment of the present invention, the part material comprises from 0.01 to 10 wt.%, preferably from 0.05 to 5 wt.%, more preferably from 0.25 to 1 wt.% of a flow agent, for example of fumed silica.

These silicas are composed of nanometric primary particles (typically between 5 and 50 nm for fumed silicas). These primary particles are combined to form aggregates. In use as flow agent, silicas are found in various forms (elementary particles and aggregates).

According to one embodiment, the part material of the present disclosure comprises:
- at least one poly(aryl ether sulfone) (PAES) polymer,
- at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, and
- from 0 to 30 wt.% of at least one additive, for example selected from the group consisting of fillers, colorants, lubricants, plasticizers, flame retardants, nucleating agents, flow enhancers and stabilizers, based on the total weight of the part material.

According to another embodiment, the part material of the present disclosure consists essentially of:
- at least one poly(aryl ether sulfone) (PAES) polymer,
- at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, and
- from 0 to 30 wt.%, from 0.1 to 28 wt.% or from 0.5 to 25 wt.% of at least one additive selected from the group consisting of fillers, colorants, lubricants, plasticizers, flame retardants, nucleating agents, flow enhancers and stabilizers, based on the total weight of the part material.

According to another embodiment, the part material of the present disclosure consists essentially of:
- from 60 to 99.5 wt.% of at least one poly(aryl ether sulfone) (PAES) polymer, preferably from 70 to 99 wt.%, more preferably from 80 to 98.5%,
- from 0.5 to 40 wt.% of at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, preferably from 1 to 30 wt.%, more preferably from 1.5 to 20 wt.%, and
- from 0 to 30 wt.%, from 0.1 to 28 wt.% or from 0.5 to 25 wt.% of at least one additive selected from the group consisting of fillers, colorants, lubricants, plasticizers, flame retardants, nucleating agents, flow enhancers and stabilizers, based on the total weight of the part material.

### Poly(aryl ether sulfone) (PAES)

According an embodiment of the present invention, the part material comprises at least one poly(aryl ether sulfone) (PAES), for example at least 60 wt.% (based on the total weight of the part material) of at least one PAES, at least 70 wt.%, at least 80 wt.%, at least 95 wt.% or at least 90 wt.% of at least one PAES.

According an embodiment of the present invention, the part material comprises less than 99.5 wt.% of at least one poly(aryl ether sulfone) (PAES), for example less than 99 wt.% (based on the total weight of the part material) of at least one PAES, less than 98.5 wt.%, less than 98 wt.%, less than 97.5 wt.% or less than 97 wt.% of at least one PAES.

For the purpose of the present invention, a "poly(aryl ether sulfone) (PAES)" may be defined as any polymer comprising recurring units (R_{PAES}) of formula (K): 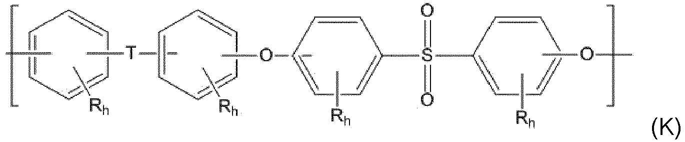 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- h, for each R, is independently zero or an integer ranging from 1 to 4; and
- T is selected from the group consisting of a bond; -CH₂-; -O-; -SO₂-; -S-; - C(O)-; a group -C(Rj)(Rk)-, where Rj and Rk, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium, for example -C(CH₃)₂-, -C(CF₃)₂-, - C(=CCl₂)- or -C(CH₃)(CH₂CH₂COOH)-; -N=N-; -RₐC=CR_{b}-, where each Rₐ and R_{b}, independently of one another, is a hydrogen or a C1-C12-alkyl, C1-C12-alkoxy, or C6-C18-aryl group; -(CH₂)ₘ- and -(CF₂)ₘ- with m being an integer from 1 to 6; an aliphatic divalent group, linear or branched, of up to 6 carbon atoms; and combinations thereof.

According to an embodiment, Rj and Rk are methyl groups.

In formula (K), T is preferably a bond, SO₂ or -C(CH₃)₂-.

According to an embodiment, h is zero for each R. In other words, according to this embodiment, the recurring units (R_{PAEs}) are units of formula (K'):

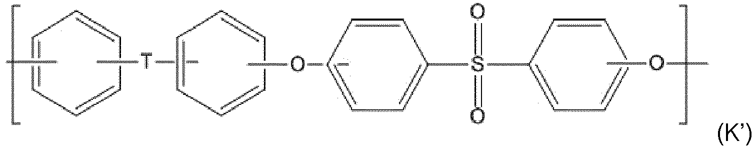

According to an embodiment of the present invention, at least 50 mol. %, at least 60 mol. %, at least 70 mol. %, at least 80 mol. %, at least 90 mol. %, at least 95 mol. %, at least 99 mol. % or all of the recurring units in the PAES are recurring units (R_{PAES}) of formula (K) or formula (K').

According to an embodiment, the PAES has a Tg ranging from 160°C to 250°C, preferably from 170°C to 240°C, more preferably from 180°C to 230°C, as measured by differential scanning calorimetry (DSC) according to ASTM D3418.

According to an embodiment, the poly(aryl ether sulfone) (PAES) is a poly(biphenyl ether sulfone) (PPSU).

A poly(biphenyl ether sulfone) polymer is a polyarylene ether sulfone which comprises a biphenyl moiety. Poly(biphenyl ether sulfone) is also known as polyphenyl sulfone (PPSU) and for example results from the condensation of 4,4'-dihydroxybiphenyl (biphenol) and 4,4'-dichlorodiphenyl sulfone.

For the purpose of the present invention, a poly(biphenyl ether sulfone) (PPSU) denotes any polymer comprising recurring units (R_{PPSU}) of formula (L): 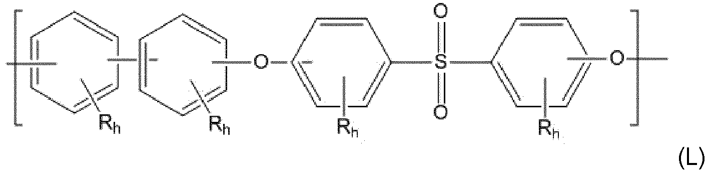 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- h, for each R, is independently zero or an integer ranging from 1 to 4.

According to an embodiment, R is, at each location in formula (L) above, independently selected from the group consisting of a C1-C12 moiety optionally comprising one or more than one heteroatoms; sulfonic acid and sulfonate groups; phosphonic acid and phosphonate groups; amine and quaternary ammonium groups.

According to an embodiment, h is zero for each R. In other words, according to this embodiment, the recurring units (R_{PPSU}) are units of formula (L'):

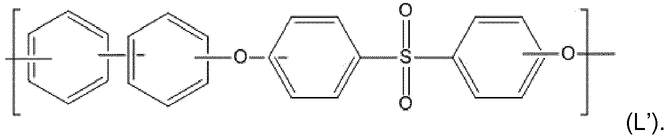

According to another embodiment, the recurring units (R_{PPSU}) are units of formula (L"):

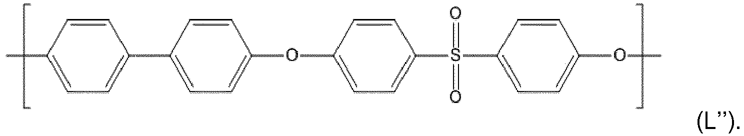

The PPSU polymer of the present invention can therefore be a homopolymer or a copolymer. If it is a copolymer, it can be a random, alternate or block copolymer.

According to an embodiment of the present invention, at least 50 mol. %, at least 60 mol. %, at least 70 mol. %, at least 80 mol. %, at least 90 mol. %, at least 95 mol. %, at least 99 mol. % or all of the recurring units in the PPSU are recurring units (R_{PPSU}) of formula (L), (L') and/or (L").

When the poly(biphenyl ether sulfone) (PPSU) is a copolymer, it can be made of recurring units (R*_{PPSU}), different from recurring units (R_{PPSU}), such as recurring units of formula (M), (N") and/or (O):

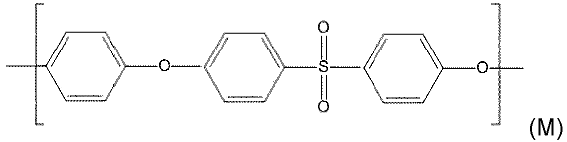

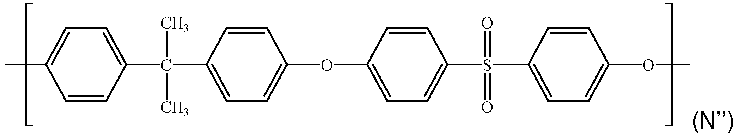

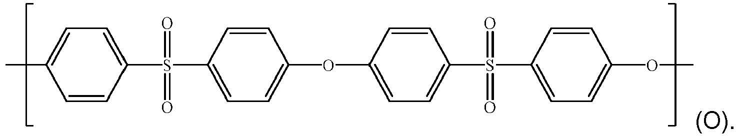

The poly(biphenyl ether sulfone) (PPSU) can also be a blend of a PPSU homopolymer and at least one PPSU copolymer, as described above.

According to the present invention, the polymeric component of the part material comprises at least one poly(biphenyl ether sulfone) (PPSU), for example at least 60 wt.% (based on the total weight of the polymeric component in the part material) of at least one PPSU, at least 70 wt.%, at least 80 wt.% or at least 90 wt.% of at least one PPSU having:
- a number average molecular weight (Mn) of at least 12,000 g/mol, for example at least 12,500 or at least 13,000 g/mol, and
- a PDI of less than 1.7, for example less than 1.6 or less than 1.5.

According to an embodiment, the poly(aryl ether sulfone) (PAES) is a polysulfone (PSU) polymer.

For the purpose of the present invention, a polysulfone (PSU) denotes any polymer comprising recurring units (R_{PSU}) of formula (N): 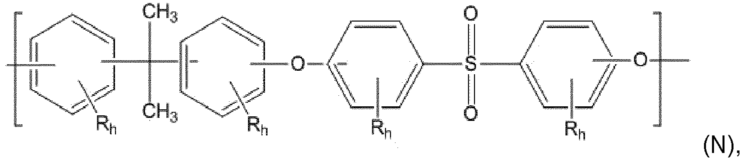 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- h, for each R, is independently zero or an integer ranging from 1 to 4.

According to an embodiment, R is, at each location in formula (N) above, independently selected from the group consisting of a C1-C12 moiety optionally comprising one or more than one heteroatoms; sulfonic acid and sulfonate groups; phosphonic acid and phosphonate groups; amine and quaternary ammonium groups.

According to an embodiment, h is zero for each R. In other words, according to this embodiment, the recurring units (R_{PSU}) are units of formula (N'):

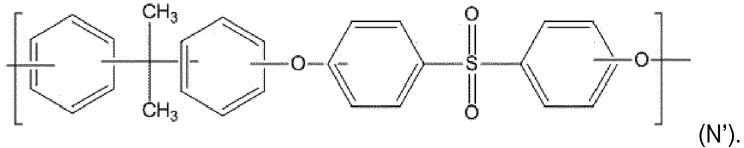

According to an embodiment of the present invention, at least 50 mol. %, at least 60 mol. % (based on the total number of moles in the polymer), at least 70 mol. %, at least 80 mol. %, at least 90 mol. %, at least 95 mol. %, at least 99 mol. % or all of the recurring units in the PSU are recurring units (R_{PSU}) of formula (N) and/or (N').

According to another embodiment, a polysulfone (PSU) denotes any polymer of which more at least 50 mol. % of the recurring units are recurring units (R_{PSU}) of formula (N") : 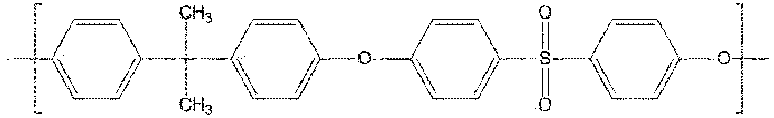
(N")
the mol. % being based on the total number of moles in the polymer.

According to an embodiment of the present invention, at least 60 mol. %, at least 70 mol. %, at least 80 mol. %, at least 90 mol. %, at least 95 mol. %, at least 99 mol. % or all of the recurring units in the PSU are recurring units (R_{PSU}) of formula (N").

The PSU polymer of the present invention can therefore be a homopolymer or a copolymer. If it is a copolymer, it can be a random, alternate or block copolymer.

When the polysulfone (PSU) is a copolymer, it can be made of recurring units (R*_{PSU}), different from recurring units (R_{PSU}), such as recurring units of formula (L"), (M) and/or (O) above described.

The polysulfone (PSU) can also be a blend of a PSU homopolymer and at least one PSU copolymer, as described above.

According to the present invention, the polymeric material comprises at least one polysulfone) (PSU), for example at least 60 wt.% (based on the total weight of the polymeric component in the part material) of at least one PSU, at least 70 wt.%, at least 80 wt.% or at least 90 wt.% of at least one PSU having:
- a number average molecular weight (Mn) of at least 12,000 g/mol, for example at least 12,500 or at least 13,000 g/mol, and
- a PDI of less than 1.7, for example less than 1.6 or less than 1.5.

According to an embodiment, the poly(aryl ether sulfone) (PAES) is a polyethersulfone (PES) polymer.

As used herein, a "polyethersulfone (PES)" denotes any polymer comprising recurring units are recurring units of formula (O):

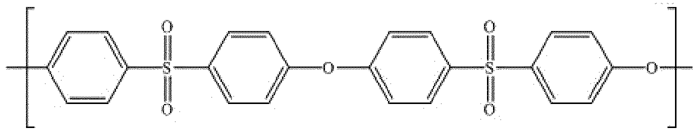

According to an embodiment, at least 50 mol.%, at least 60 mol. %, 70 mol. %, 80 mol. %, 90 mol. %, 95 mol. %, 99 mol. %, and most preferably all of the recurring units in the PES are recurring units of formula (o).

The PAES of the present invention can be prepared by any process available to the skilled person in the art.

The PAES of the present invention may, for example, be prepared by condensation of at least one aromatic dihydroxy monomer (a1), with at least one aromatic sulfone monomer (a2) comprising at least two halogen substituents. The condensation may be carried out in a solvent or the condensation can be solvent-free, that-is-to-say can be conducted in the melt, in the absence of a solvent. When the condensation is solvent-free, the reaction can be carried out in equipment made from materials inert toward the monomers. In this case, the equipment is chosen in order to provide enough contact of the monomers, and in which the removal of volatile reaction products is feasible. Suitable equipment includes agitated reactors, extruders and kneaders, for example mixing kneaders from List AG or BUSS. The use of mixing kneaders may notably be useful to prepare a solvent-free PAES for reasons of the residence time which can be longer than in an extruder. The equipment may for example be operated at:
- a shear rate (i.e. velocity gradient in the kneading material in the gap between the rotating kneading element and the wall) in the range from 5 to 500 s⁻¹, preferably from 10 to 250 s⁻¹, in particular from 20 to 100 s⁻¹, and
- a fill level (i.e. the proportion that is filled by the starting monomers of the volume capacity in the kneader which can be filled with monomers and which permits mixing) in the range from 0.2 to 0.8, preferably from 0.22 to 0.7, in particular from 0.3 to 0.7, specifically from 0.35 to 0.64.

When the condensation is carried out in a solvent, the solvent is for example a polar aprotic solvent selected from the group consisting of N-methylpyrrolidone (NMP), N,Ndimethylformamide (DMF), N,N-dimethylacetamide (DMAC), 1,3-dimethyl-2-imidazolidinone, tetrahydrofuran (THF), dimethyl sulfoxide (DMSO), chlorobenzene and sulfolane. The condensation is preferably carried out in sulfolane or NMP.

The condensation may be carried out in the presence of a base, for example selected from the group consisting of potassium carbonate (K₂CO₃), potassium tert-butoxide, sodium hydroxide (NaOH), potassium hydroxide (KOH), sodium carbonate (Na₂CO₃), cesium carbonate (Cs₂CO₃) and sodium tert-butoxide. The base acts to deprotonate the component (a1) during the condensation reaction.

The condensation is preferably carried out in the presence of sodium hydroxide (NaOH), potassium carbonate (K₂CO₃), sodium carbonate (Na₂CO₃) or a blend of both of potassium carbonate (K₂CO₃) and sodium carbonate (Na₂CO₃). According to an embodiment, the condensation of step (a) is carried out in the presence of a low particle size alkali metal carbonate, for example comprising anhydrous K₂CO₃, having a volumeaveraged particle size of less than about 100 µm, for example less than 50 µm, less than 30 µm or less than 20 µm.

The molar ratio (a1):(a2) may be from 0.9 to 1.1, for example from 0.92 to 1.08 or from 0.95 to 1.05.

According to an embodiment, the monomer (a2) is a 4,4-dihalosulfone comprising at least one of a 4,4'-dichlorodiphenyl sulfone (DCDPS) or 4,4'-difluorodiphenyl sulfone (DFDPS), preferably DCDPS.

According to an embodiment, the monomer (a1) comprises, based on the total weight of the monomer (a1), at least 50 wt.% of 4,4'-dihydroxybiphenyl (biphenol), at least 50 wt.% of 2,2-bis(4-hydroxyphenyl)propane (bisphenol A) or at least 50 wt.% of 4, 4'-dihydroxydiphenyl sulfone (bisphenol S).

According to the condensation, the monomers of the reaction mixture are generally reacted concurrently. The reaction is preferably conducted in one stage. This means that the deprotonation of monomer (a1) and the condensation reaction between the monomers (a1) and (a2) takes place in a single reaction stage without isolation of the intermediate products.

According to an embodiment, the condensation is carried out in a mixture of a polar aprotic solvent and a solvent which forms an azeotrope with water. The solvent which forms an azeotrope with water includes aromatic hydrocarbons such as benzene, toluene, xylene, ethylbenzene, chlorobenzene and the like. It is preferably toluene or chlorobenzene. The azeotrope forming solvent and polar aprotic solvent are used typically in a weight ratio of from about 1:10 to about 1:1, preferably from about 1:5 to about 1:1. Water is continuously removed from the reaction mass as an azeotrope with the azeotrope forming solvent so that substantially anhydrous conditions are maintained during the polymerization. The azeotrope-forming solvent, for example, chlorobenzene, is removed from the reaction mixture, typically by distillation, after the water formed in the reaction is removed leaving the PAES dissolved in the polar aprotic solvent.

The temperature of the reaction mixture is kept at about 150°C to about 350°C, preferably from about 210°C to about 300°C for about one to 15 hours.

The inorganic constituents, for example sodium chloride or potassium chloride or excess of base, can be removed, before or after isolation of the PAES, by suitable methods such as dissolving and filtering, screening or extracting.

According to an embodiment, the amount of PAES at the end of the condensation is at least 30 wt.% based on the total weight of the PAES and the polar aprotic solvent, for example at least 35 wt.% or at least or at least 37 wt.% or at least 40 wt.%.

At the end of the reaction, the PAES polymer is separated from the other components (salts, base, ...) to obtain a PAES solution. Filtration can for example be used to separate the PAES polymer from the other components. The PAES solution can then be used as such for step (b) or alternatively, the PAES can be recovered from the solvent, for example by coagulation or devolatilization of the solvent.

### Per(halo)fluoropolymer (FP)

The part material comprises at least one per(halo)fluoropolymer (FP) having a melt viscosity of at most 1.5×10³ Pa.s, as measured according to ASTM D3835 at 372°C and 1000 s⁻¹ using a Hastelloy die of 1 mm × 10 mm.

According to the present invention, the per(halo)fluoropolymer (FP) may be a homopolymer or a copolymer, for example a random, an alternating or a block copolymer.

According to the present invention, a per(halo)fluoropolymer may be a polyaddition polymer having at least 98 mol.% of recurring units derived from a per(halo)fluoromonomer, at least 98.5 mol.%, at least 99 mol.%, at least 99.5 mol.% or at least 99.9 mol.% of recurring units derived from a per(halo)fluoromonomer, the mol.% being based on the total number of moles in the polymer (FP). Preferably, the per(halo)fluoropolymer of the present invention is a polyaddition polymer comprising 100 mol.%of recurring units derived from a per(halo)fluoromonomer, based on the total number of moles in the polymer.

For the purpose of the invention, a per(halo)fluoromonomer may be an ethylenically unsaturated monomer comprising at least two carbon atoms and at least one fluorine atom, and which is free of hydrogen atom directly linked to a carbon atom (i.e. linked to a carbon atom through a single bond C-H).

According to the present invention, the per(halo)fluoromonomer may comprise, in addition to the carbon and the fluorine atoms, at least one halogen atom other than fluorine, for example at least one chlorine atom, at least one bromine atom and/or at least one iodine atom. Alternatively, the per(halo)fluoromonomer may comprise carbon and fluorine atoms exclusively. According to this embodiment, the per(halo)fluoromonomer is a perfluoromonomer.

According to the present invention, the per(halo)fluoromonomer may comprise at least one heteroatom other than a halogen atom ; in particular, it may further comprise at least one oxygen atom, phosphorus atom and/or nitrogen atom. According to this embodiment, the per(halo)fluoromonomer may also further comprise at least one hydrogen atom linked to a heteroatom. For example, the per(halo)fluoromonomer may comprise moiety selected from the group consisting of -OH, -NH₂, -C(=O)OH, -C(=O)NH₂, -SO₃H, -SO₂H, -PO₃H₂ or -PO₂H₂.

According to a preferred embodiment, the per(halo)fluoromonomer does not comprise any hydrogen atom.

According to an embodiment of the present invention, the per(halo)fluoropolymer comprises no recurring unit derived from a monomer distinct from a per(halo)fluoromonomer.

Alternatively, the per(halo)fluoropolymer comprises up to 2 mol.% of recurring units derived from a monomer distinct from a per(halo)fluoromonomer, up to 1 mol.%, up to 0.5 mol.% or up to 0.1 mol.% of recurring units derived from a monomer distinct from a per(halo)fluoromonomer, based on the total number of moles in the polymer (FP).

Examples of ethylenically unsaturated monomers other than per(halo)fluoromonomers are:
- ethylene, propylene and C4-C12 mono-olefins,
- non fluorinated perhalogenated mono-olefins such as tetrabromoethylene and hexabromopropylene,
- partially fluorinated mono-olefins such as vinylidene fluoride and trifluoroethylene, and
- partially halogenated, non-fluorinated mono-olefins such as vinylidene chloride.

The per(halo)fluoropolymer (FP) of the present invention is preferably a polytetrafluoroethylene (PTFE).

For the purpose of the present invention, a polytetrafluoroethylene (PTFE) is a per(halo)fluoropolymer having at least 98 mol.% of recurring units derived from tetrafluoroethylene (TFE), at least 98.5 mol.%, at least 99 mol.%, at least 99.5 mol.% or at least 99.9 mol.% of recurring units derived from tetrafluoroethylene (TFE), the mol.% being based on the total number of moles in the polymer (FP). Preferably, the per(halo)fluoropolymer of the present invention is a polyaddition polymer comprising 100 mol.%of recurring units derived from a tetrafluoroethylene (TFE), based on the total number of moles in the polymer.

According to an embodiment, all the recurring units of the polytetrafluoroethylene (PTFE) derive from tetrafluoroethylene (TFE); the polytetrafluoroethylene (PTFE) may then be qualified as a "homopolymer".

According to another embodiment, the PTFE comprises up to 2 mol.% of recurring units derived from an ethylenically unsaturated fluorinated monomer distinct from TFE, up to 1 mol.%, up to 0.5 mol.% or up to 0.1 mol.% of recurring units derived from an ethylenically unsaturated monomer distinct from TFE, based on the total number of moles in the polymer (FP).

The use of fibular or fibril PTFE (also known as high molecular weight PTFE or high-MW PTFE) has been described in the literature as an anti-drip agent for thermoplastics in a fire-situation. According to an embodiment of the present invention, the PTFE is non-fibril or non-fibular. Preferably, the PTFE is a low molecular weight PTFE (low-MW PTFE).

Non limiting examples of suitable ethylenically unsaturated fluorinated monomers different from TFE of the modified PTFEs and/or of the thermoplastic TFE copolymers are:
- C₃-C₈ perfluoroolefins, such as hexafluoropropylene (HFP), perfluoroisobutylene;
- C₂-C₈ hydrogen-containing fluoroolefins, such as trifluoroethylene (TrFE), vinylidene fluoride (VDF), vinyl fluoride (VF), pentafluoropropylene, and hexafluoroisobutylene;
- C₂-C₈ chloro- and/or bromo- and/or iodo-containing fluoroolefins, such as chlorotrifluoroethylene (CTFE) and bromotrifluoroethylene;
- fluoroalkylvinylethers of formula CF₂=CFOR_{f1}, wherein R_{f1} is a C₁-C₆ fluoroalkyl, e.g. -CF₃, -C₂F₅, -C₃F₇;
- fluorooxyalkylvinylethers of formula CF₂=CFOX₀, wherein X₀ is a C₁-C₁₂ fluorooxyalkyl group comprising one or more than one ethereal oxygen atom, including notably fluoromethoxyalkylvinylethers of formula CF₂=CFOCF₂OR_{f2}, with R_{f2} being a C₁-C₃ fluoro(oxy)alkyl group, such as -CF₂CF₃, -CF₂CF₂-O-CF₃ and -CF₃
- fluorodioxoles, of formula: 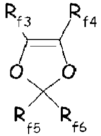
wherein each of R_{f3}, R_{f4}, R_{f5}, R_{f6}, equal or different each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂CF₂OCF₃.

As above explained, the polymer (FP) of the present invention is a low melt viscosity polymer, for example a low melt viscosity PTFE. Polymers, e.g. PTFE, well-suited for the present invention are generally provided as micropowders, which may be obtained by irradiation of standard high molecular weight FP, e.g. PTFE/modified PTFE, and which are generally known for possessing a considerably lower molecular weight than the typical molecular weight of standard high molecular weight/high melt viscosity PTFEs/modified PTFEs, which enables the micropowders of PTFEs and/or modified PTFE to be by themselves melt-flowable.

Preferably, the polymer (FP) is selected from the group consisting of possibly modified PTFE micropowders having a melt viscosity of at most 1.5×10³ Pa.s, as measured according to ASTM D3835 at 372°C and 1000 s⁻¹ using a Hastelloy die of 1 mm × 10 mm, for example at most 1.4×10³ Pa.s, at most 1.3×10³ Pa.s, at most 1.0×10³ Pa.s or at most 0.8×10³ Pa.s.

Micropowders of FP, e.g. PTFE or of modified PTFE, well-suited for the present invention, can be characterized by their average particle size d₅₀, determined by laser light diffraction according to ISO 13320. According to an embodiment, the d₅₀ of the FP micropowder is of at most 25.0 µm, for example at most 22.0 µm or at most 20.0 µm. Lower boundary for d₅₀ is not particularly limited; it is nevertheless understood that to the sake of convenience in handling, d₅₀ of FP micropowders is generally of at least 0.5 µm, preferably at least 1.0 µm.

Particularly good results have been obtained with micropowders of PTFE or of modified PTFE possessing an average size d₅₀ of between 2.0 µm and 15.0 µm, preferably of between 2.5 µm and 12.0 µm.

The average size d₅₀ of micropowders of FP, e.g. PTFE or of modified PTFE, is determined according to ISO 13320 by laser light diffraction, for instance using a laser diffraction particle size LS^{™} 13 320 MW - Beckman Coulter instrument.

Micropowders of FP, e.g. PTFE or of modified PTFE, well-suited for the present invention, can be characterized by their amount of carboxylic chain end groups (in particular -COOH and -COF groups). According to an embodiment, the amount of carboxylic chain end groups of the FP micropowder is at least 13 mmol/kg, preferably at least 14 mmol/kg, more preferably at least 15 mmol/kg and/or advantageously at most 50 mmol/kg, preferably at most 40 mml/kg, more preferably at most 30 mmol/kg.

Amount of carboxylic chain end groups (-COOH and -COF) can be determined according to the method described in PIANCA, M., et al. End groups in fluoropolymers. Journal of Fluorine Chemistry. 1999, vol.95, p.71-84. Concentration of relevant chain ends are expressed as mmoles of groups per kg of polymer (F).

A PTFE micropowder which has been found particularly effective in the compositions of the present invention is POLYMIST^{®} PTFE micronized powder commercially available from Solvay Specialty Polymers USA, LLC.

The part material of the present invention may comprise distinct aromatic polymers. It may for example comprise two or three distinct polymers, for example one poly(aryl ether ketone) (PAEK) polymer, e.g. poly(ether ether ketone) (PEEK), one polyetherimide (PEI), and/or one polyarylene sulfide (PAS), e.g. polyphenylene sulfide (PPS). It may also comprise two distinct PAES polymers, for example a PPSU of different molecular weight and a PSU.

According to one embodiment, the part material of the present disclosure comprises, based on the total weight of the part material:
- at least 30 wt.% of at least one poly(aryl ether sulfone) (PAES) polymer, for example at least 40 wt.%, at least 50 wt.% of a PAES polymer,
- at least 0.2 wt.% of at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, for example at least 0.5 wt.%, at least 1 wt.% or at least 1.4 wt. %, and
- from 0 to 30 wt.% of at least one additive, for example selected from the group consisting of fillers, colorants, lubricants, plasticizers, flame retardants, nucleating agents, flow enhancers and stabilizers, based on the total weight of the part material.

According to one embodiment, the part material of the present disclosure comprises, based on the total weight of the part material, at most 10 wt.% of at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, for example at most 9 wt.%, at most 8 wt.% or at most 5 wt. %.

According to an embodiment, the part material of the present invention comprises a polymeric component which comprises:
a) from 30 to 95 wt.% of at least one poly(aryl ether sulfone) (PAES), and
b) from 5 to 70 wt.% of at least one poly(aryl ether ketone) (PAEK), for example having a weight average molecular weight (Mw) ranging from 75,000 to 150,000 g/mol, as determined by gel permeation chromatography (GPC) using phenol and trichlorobenzene (1:1) at 160°C, with polystyrene standards,
based on the total weight of the polymeric component of the part material.

The part material of the present disclosure can be made by methods well known to the person of ordinary skill in the art. For example, such methods include, but are not limited to, melt-mixing processes. Melt-mixing processes are typically carried out by heating the polymer components above the melting temperature of the thermoplastic polymers thereby forming a melt of the thermoplastic polymers. In some embodiments, the processing temperature ranges from about 250-450°C, preferably from about 290-440°C, from about 300-430°C or from about 310-420°C. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the part material, the components of the part material, e.g. PPSU, FP and optionally additives, are fed to the melt-mixing apparatus and melt-mixed in that apparatus. The components may be fed simultaneously as a powder mixture or granule mixer, also known as dry-blend, or may be fed separately.

The order of combining the components during melt-mixing is not particularly limited. In one embodiment, the component can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

### Shape of the part material

The present disclosure also relates to a part material, for example a filament material or pellets, comprising at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm.

This material well-suited for use in a method of making a three-dimensional object, using a 3D printer, can be in any form adapted to the printer used to 3D print the object. For example the part material may be in the form of a filament or pellets or it can be in the form of microparticles.

All of the embodiments described above with respect to the part material do apply equally to the shape of the part material.

As an example, the part material of the disclosure may include other components. For example the material may comprise at least one additive, notably at least one additive selected from the group consisting of fillers, colorants, lubricants, plasticizers, stabilizers, flame retardants, nucleating agents, flow enhancers and combinations thereof.

If the part material is in the form of pellets, the pellets may be spherical, have a diameter of at least 0.5 mm, for example at least 0.6 mm or at least 0.7 mm and at most 5 mm, for example at most 4 mm or at most 3 mm.

If the part material is in the form of a filament, the filament may have a cylindrical or substantially cylindrical geometry, or may have a non-cylindrical geometry, such as a ribbon filament geometry; further, filament may have a hollow geometry, or may have a core-shell geometry, with the support material of the present disclosure being used to form either the core or the shell.

When the filament has a cylindrical geometry, its diameter may vary between 0.5 mm and 5 mm, for example between 0.8 and 4 mm or for example between 1 mm and 3.5 mm. The diameter of the filament can be chosen to feed a specific FFF 3D printer. An example of filament diameter used extensively in FFF process is 1.75 mm or 2.85 mm diameter. A good control of the filament size with a reduced standard deviation can be obtained with the PPSU polymer of the present invention. Notably, the filament can have a cylindrical geometry and a diameter comprised between 0.5 and 5 mm ± 0.15 mm, for example between 0.8 and 4 mm ± 0.1 mm or for example between 1 and 3.5 mm ± 0.08 mm.

The filament or pellets of the present disclosure can be made from the part material by methods including, but not limited to, melt-mixing processes. Melt-mixing processes are typically carried out by heating the polymer components above the highest melting temperature and glass transition temperature of the thermoplastic polymers thereby forming a melt of the thermoplastic polymers. In some embodiments, the processing temperature ranges from about 250-450°C, preferably from about 290-440°C, from about 300-430°C or from about 310-420°C.

The process for the preparation of the filament can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the filament, the components of the part material, i.e. at least PAES and FP of the present invention, and optionally additives, are fed to the melt-mixing apparatus and melt-mixed in that apparatus. The components may be fed simultaneously as a powder mixture or granule mixer, also known as dry-blend, or may be fed separately.

As already explained above, the order of combining the components of the material to be printed during melt-mixing is not particularly limited.

The method of making the filaments also comprises a step of extrusion, for example with a die. For this purpose, any standard molding technique can be used; standard techniques including shaping the polymer compositions in a molten/softened form can be advantageously applied, and include notably compression molding, extrusion molding, injection molding, transfer molding and the like. Extrusion molding is preferred. Dies may be used to shape the articles, for example a die having a circular orifice if the article is a filament of cylindrical geometry.

The method may comprise if needed several successive steps of melt-mixing or extrusion under different conditions.

The process itself, or each step of the process if relevant, may also comprise a step consisting in a cooling of the molten mixture.

According to an embodiment, the process for preparing the filament material, comprises the steps of:
- providing at least one PAES and at least of FP of the present invention, and
- processing the PAES and the FP in the form of a filament in an extruder, wherein the temperature of the filament at the extruder outlet is below 400°C, preferably below 390°C, more preferably below 380°C.

### Support material

The method of the present disclosure may also employ a polymeric component to support the 3D object under construction. This polymeric component, similar or distinct from the part material used to build a 3D object, is hereby called support material. Support material may be required during 3D printing to provide vertical and/or lateral support in the higher operating conditions required for the high-temperature part materials (e.g. PPSU requiring a processing temperature around 320-400°C).

The support material, possibly used in the context of the present method, advantageously possesses a high melting temperature (i.e. above 260°C), in order to resist high temperature applications. The support material may also possess a water absorption behaviour or a solubility in water at a temperature lower than 110°C, in order sufficiently swell or deform upon exposure to moisture.

According to an embodiment of the present disclosure, the method of making a 3D object using an additive manufacturing system further comprises the steps of:
- providing a support material,
- printing layers of a support structure from the support material, and
- removing at least a portion of the support structure from the three-dimensional object.

A variety of polymeric components can be used as a support material. Notably, support material can comprise polyamides or copolyamides, such as for example the ones described in patent applications WO 2017/167691 and WO 2017/167692.

According to another embodiment, due to the easier processing at lower temperature of the PAES build material, the support material can be a lower Tm and/or lower Tg polymeric composition for example comprising polyglycolic acid (PGA), polyvinylpyrrolidone (PVP), polyvinyl alcohol (PVA), ionomers, or (meth)acrylic acid based polymers.

### Applications

The present disclosure also relates to the use of a part material comprising at least one PAES and at least of FP as described above, for the manufacture of three-dimensional objects using an additive manufacturing system, for example FFF, SLS, MJF or FRTP printing methods.

The present disclosure also relates to the use of a filament material comprising at least one PAES and at least of FP as described above, for the manufacture of three-dimensional objects, for example using an additive manufacturing system, for example FFF, SLS, MJF or FRTP printing methods.

All of the embodiments described above with respect to the part material do apply equally to the use of the part material or the use of the filament material.

The present disclosure also relates to the use of a part material comprising at least one PAES and at least of FP as described above, for the manufacture of a filament for use in the manufacture of three-dimensional objects, for example using an additive manufacturing system, for example FFF, PAM, SLS, MJF or FRTP printing methods.

The present disclosure also relates to 3D objects or 3D articles obtainable, at least in part, from the method of making 3D object(s) of the present disclosure, using the part material herein described. These 3D objects or 3D articles present improved tensile properties and impact resistance, in comparison to 3D objects not comprising the FP of the invention, as shown in the examples of the present invention. These 3D objects or 3D articles also present improved aesthetic properties, in comparison to injection-molded objects prepared with the same materials (no mirror effect).

The 3D objects or articles obtainable by such method of making can be used in a variety of final applications. Mention can be made in particular of aircraft parts and complex shaped parts in the aerospace industry, but also to implantable device, dental prostheses, brackets and under-the-hood parts in the automotive industry.

### EXAMPLES

The disclosure will be now described in more detail with reference to the following examples, whose purpose is merely illustrative and not intended to limit the scope of the disclosure.

### Starting Materials

The following polymers were used to prepare filaments:
PPSU #1: a poly(biphenyl ether sulfone) (PPSU) with a Mw of 46,500 g/mol, prepared according to the following process:
The synthesis of the PPSU was achieved by the reaction in a 1L flask of 83.8 g of 4,4'-biphenol (0.450 mol), 131.17 g of 4,4'-dichlorodiphenyl sulfone (0.457 mol) dissolved in a mixture of 400 g of sulfolane with the addition of 66.5g (0.481 mol) of dry K₂CO₃.

The reaction mixture was heated up to 210 °C and maintained at this temperature until the polymer had the expected Mw. An excess of methyl chloride was then added to the reaction.

The reaction mixture was diluted with 600 g of MCB. The poly(biphenyl ether sulfone) was recovered by filtration of the salts, coagulation, washing and drying. The GPC analysis showed a number average molecular weight (Mw) of 46,500 g/mol, a Mn of 19,500 g/mol and a PDI index of 2.48.

The molecular weight of PPSU#1 was measured by gel permeation chromatography (GPC), using methylene chloride as a mobile phase. Two 5µ mixed D columns with guard column from Agilent Technologies were used for separation. An ultraviolet detector of 254nm was used to obtain the chromatogram. A flow rate of 1.5 ml/min and injection volume of 20 µL of a 0.2 w/v% solution in mobile phase was selected. Calibration was performed with 12 narrow molecular weight polystyrene standards (Peak molecular weight range: 371,000 to 580 g/mol). The weight average molecular weight (Mw) and number average molecular weight (Mn) was reported.

FP #1: Polymist^{®} F5A is a PTFE micropowder available from Solvay Specialty Polymers USA, LLC, possessing a melt viscosity of 150 Pa.s, as measured according at ASTM D3835 at 372°C and 1000 s⁻¹, a d₅₀ of 3.90 µm, as measured by laser light diffraction, and an amount of carboxylic chain end groups of around 20 mmol/kg.

FP #2: KT-300M is a PTFE micropowder available from Kitamura Ltd., possessing a d₅₀ of 40 µm, as measured by laser light diffraction (Microtrac FRA). The melt viscosity of the product was not measurable according to ASTM D3835 at 372°C and 1000 s⁻¹ using a Hastelloy die of 1 mm x 10 mm. The melt viscosity is therefore higher than 1.5×10³ Pa.s.

### Black pigment: MPC Channel Black from Keystone Aniline Corporation

### Compound preparation

Each formulation was melt compounded using a 26 mm diameter Coperion^{®} ZSK-26, a twin screw co-rotating partially intermeshing extruder having 12 barrel sections and an overall LID ratio of 48. The barrel sections 2 through 12 and the die were heated to set point temperatures as follows:
Barrels 2-8: 350 °C
Barrels 9-12: 340 °C
Die: 360 °C

In each case, the ingredients were fed at barrel section 1 using gravimetric feeders. The extruder was operated at screw speeds of around 150 RPM. Vacuum was applied at barrel zone 10 with a vacuum level of about 27 inches of mercury. A single-hole die was used for all the compounds to give a filament approximately 2.6 to 2.7 mm in diameter and the polymer filament exiting the die was cooled in water and fed to the pelletizer to generate pellets approximately 2.7 mm in length. Pellets were dried at 140°C in a desiccant drier for 16 h prior to filament processing

### Filament preparation

The blends were extruded into strand that were pelletized on a Brabender^{®} Intelli-Torque Plasti-Corder^{®} Torque Rheometer extruder equipped with a 0.75" 32 LID general purpose single screw.

For the filament of example 1 (invention) and example 2 (comparative example), the four heating zone were regulated at 340-350-360-360°C. The pellets were then extruded into filaments of diameter of 1.75 mm very easily at low processing temperature using a Brabender^{®} Intelli-Torque Plasti-Corde^{®} Torque Rheometer extruder equipped with a 0.75" 32 LID general purpose single screw, a filament head adapter, a 2.5-mm nozzle and ESI-Extrusion Services downstream equipment comprising a cooling tank, a belt puller, and a Dual Station Coiler. A Beta LaserMike^{®} DataPro 1000 was used to monitor filament dimensions. The melt strand was cooled with air. The Brabender^{®} speed was 50 rpm and the puller speed was 28 fpm.

### Fused Filament Fabrication bars (FFF bars)

Test bars (i.e. ASTM D638 Type V bars) were printed from the above filaments of 1.75 mm in diameter on a Hyrel 16A 3D printer equipped with a 0.5 mm diameter nozzle. The extruder temperature was 370°C and the bed temperature was 200°C. Bars were oriented in the XY direction on the build platform during printing. Test bars were printed with a 2 mm-wide brim and three perimeters. The tool path was a cross-hatch pattern with a 45° angle with respect to the long axis of the part. The speed of the nozzle for deposition of the first layer was 25 mm/ sec; otherwise, speed for the next layers was 35 mm/s. The first layer height in each case was 0.5 mm, with subsequent layers deposited at 0.4 mm height and 100% fill density.

### Mechanical properties

Notched impact strength was determined according to the ASTM D256 method using a 2-ftlb hammer. Results are shown in Table 1 below.

Tensile strength and modulus were determined according to the ASTM D638 method with Type V bars. Tensile testing speed was 0.05"/min.

**Table 1**

| **Polymer composition** | **Ex 1 (inv)** | **Ex 2 (comp)** |
|---|---|---|
| PPSU #1 | 97 | 97 |
| FP #1 | 3 | - |
| FP #2 | - | 3 |
| Black pigments | 0.1 | 0.1 |

| | **Surface aspect** | |
|---|---|---|
| | ++ Deep black, homogenous | - Signs of incompatibility |

| | **Mechanical properties** | |
|---|---|---|
| Tensile modulus (GPa) | 1.68 | 1.64 |
| Tensile strength at yield (GPa) | 52.6 | 47.4 |
| Tensile elongation at break (%) | 8.8 | 6.7 |
| Notched impact resistance (J) | 8.8 | 2.7 |

Both compositions of Ex 1 (invention) and Ex 2 (comparative) have been injection molded into ASTM D638 method with Type V bars to compare the surface properties with 3D printed bars. Injection molded bars of Ex 2 present a deep black surface, but with some evidences of granularity at the surface, demonstrating the incompatibility of the PTFE KT-300M with PPSU. The combination of PTFE KT-300M and PPSU therefore does not sufficiently good surface aspect for the application. Injection molded bars of Ex 1 present a more homogeneous surface (no signs of incompatibility), however the surface looks more silver than black, with a mirror effect that is not desired for the application.

Both compositions were then 3D printed as described above.

Quite surprisingly, 3D printing of filaments of Ex 1 leads to bars with improved the surface aspect in comparison to injection molded bars. Bars of deep black homogeneous color were obtained for 3D printed samples. The bars did not present the silver and mirror aspect observed on injection molded bars.

As far as composition of Ex 2 is concerned, the 3D printing did not improve the bars surface aspect and the mechanical properties are much lower than the ones obtained with the composition of Example 1.

The inventors thereby show that 3D printing a composition comprising a combination of a PPSU and a PTFE of a specific melt flow leads to parts having better surface aspect and mechanical properties with a higher tensile strength, a higher toughness observed (notched impact resistance) and a higher elongation at break.

The parts printed from the composition of example 1, comprising a combination of PTFE of low melt flow and at least one PPSU, are well suited for aerospace application.

## Claims

1. A method for manufacturing a three-dimensional (3D) object with an additive manufacturing system, comprising a step consisting in printing layers of the three-dimensional object from the part material comprising:
- at least one poly(aryl ether sulfone) (PAES) polymer, and
- at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm.

2. The method of claim 1, wherein the step of printing layers comprises extruding the part material.

3. The method of any one of the preceding claims, wherein the part material is in the form of a filament having a cylindrical geometry and a diameter comprised between 0.5 and 5 mm ± 0.15 mm.

4. The method of any one of the preceding claims, wherein the FP is a polytetrafluoroethylene (PTFE) having at least 98 mol.% of recurring units derived from tetrafluoroethylene (TFE), based on the total number of moles in the FP.

5. The method of any one of the preceding claims, wherein the PAES polymer comprising at least 50 mol.% of recurring units (R_{PAES}) of formula (K), based on the total number of moles in the PAES: 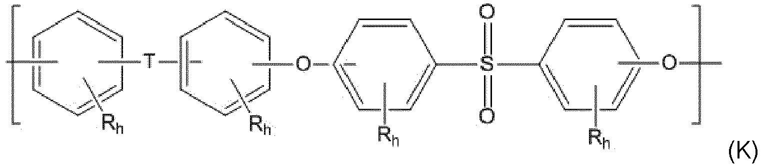 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- h, for each R, is independently zero or an integer ranging from 1 to 4; and
- T is selected from the group consisting of a bond; -CH₂-; -O-; -SO₂-; -S-; -C(O)-; a group -C(Rj)(Rk)-, where Rj and Rk, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium, for example -C(CH₃)₂-, - C(CF₃)₂-, -C(=CCl₂)- or -C(CH₃)(CH₂CH₂COOH)-; -N=N-; -RₐC=CR_{b}-, where each Rₐ and R_{b}, independently of one another, is a hydrogen or a C1-C12-alkyl, C1-C12-alkoxy, or C6-C18-aryl group; -(CH₂)ₘ- and -(CF₂)ₘ- with m being an integer from 1 to 6; an aliphatic divalent group, linear or branched, of up to 6 carbon atoms; and combinations thereof.

6. The method of claim 5 wherein T is a bond, -SO₂ or -C(CH₃7. ₂-.

7. The method of any one of the preceding claims, wherein the part material further comprises:
- at least one additional polymer and/or
- up to 30 wt.%, based on the total weight of the part material, of at least one additive selected from the group consisting of fillers, colorants, lubricants, plasticizers, stabilizers, flame retardants and nucleating agents.

8. The method of any one of the preceding claims, wherein the PAES is a poly(biphenyl ether sulfone) (PPSU).

9. The method of claim 8 wherein the PPSU comprises the recurring units of formula (L"):

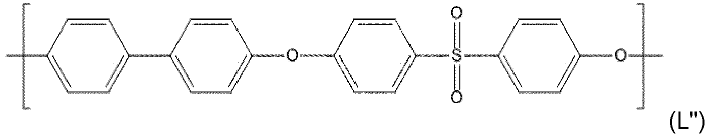

10. A material for 3D printing for use as a deposition material in a fused filament fabrication (FFF) printer, in the form of a filament having a diameter comprised between 1 and 3.5 mm± 0.15 mm, comprising:
- at least one poly(aryl ether sulfone) (PAES), and
- at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm.

11. The material of claim 10, wherein the polymeric component comprises at least 60 wt. % of the PAES polymer(s), based on the total weight of polymeric component of the material.

12. The material of any one of claims 10-11, further comprising from 0.1 to 30 wt.% of an additive selected from the group consisting of fillers, colorants, lubricants, plasticizers, flame retardants, nucleating agents, flow enhancers and stabilizers.

13. The material of any one of claims 10-12, wherein the per(halo)fluoropolymer (FP) is a polytetrafluoroethylene (PTFE).

14. The material of any one of claims 10-13, wherein the poly(aryl ether sulfone) is a poly(biphenyl ether sulfone) (PPSU).

15. Use of a part material comprising at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, for the manufacture of three-dimensional (3D) objects using an extrusion-based additive manufacturing system.

16. Use of a part material comprising at least one poly(aryl ether sulfone) (PAES) polymer and at least one per(halo)fluoropolymer (FP), having a melt viscosity of at most 1.5×10³ Pa.s, as measured according to ASTM D3835 at 372°C and 1000 s⁻¹ using a Hastelloy die of 1 mm × 10 mm, for the manufacture of a filament for use in the manufacture of three-dimensional objects.

## Patentansprüche

1. Verfahren zur Herstellung eines dreidimensionalen (3D) Objekts mit einem Additivherstellungssystem, umfassend einen Schritt bestehend aus dem Drucken von Schichten des dreidimensionalen Objekts aus dem Teilematerial, umfassend:
- mindestens ein Poly(arylethersulfon)(PAES)-Polymer und
- mindestens ein Per(halogen)fluorpolymer (FP), das eine Schmelzviskosität von höchstens 1,5 × 103 Pa.s aufweist, gemessen gemäß ASTM D3835 bei 372 °C und 1000 s⁻¹ unter Verwendung einer Hastelloy-Düse von 1 mm × 10 mm.

2. Verfahren nach Anspruch 1, wobei der Schritt des Druckens der Schichten das Extrudieren des Teilematerials umfasst.

3. Verfahren nach einem der vorstehenden Ansprüche, wobei das Teilematerial in Form eines Filaments vorliegt, das eine zylindrische Geometrie und einen Durchmesser zwischen 0,5 und 5 mm ± 0,15 mm aufweist.

4. Verfahren nach einem der vorstehenden Ansprüche, wobei es sich bei dem FP um ein Polytetrafluorethylen (PTFE) mit mindestens 98 Mol.-% wiederkehrenden, von Tetrafluorethylen (TFE) abgeleiteten Einheiten, bezogen auf die Gesamtzahl der Mole in dem FP, umfasst.

5. Verfahren nach einem der vorstehenden Ansprüche, wobei das PAES-Polymer zu mindestens 50 Mol.-% wiederkehrende Einheiten (R_{PAES}) der Formel (K), bezogen auf die Gesamtzahl der Mole in dem PAES, umfasst: 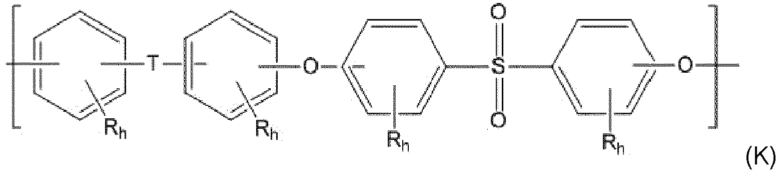 wobei
- R an jeder Position unabhängig ausgewählt ist aus einem Halogen, einem Alkyl, einem Alkenyl, einem Alkinyl, einem Aryl, einem Ether, einem Thioether, einer Carbonsäure, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin und einem quartären Ammonium;
- h für jedes R unabhängig null oder eine ganze Zahl im Bereich von 1 bis 4 ist; und
- T ausgewählt ist aus der Gruppe bestehend aus einer Bindung; -CH₂-; -O-; -SO₂-; -S-; -C(O)-; einer Gruppe C(Rj) (Rk)-, wobei Rj und Rk, gleich oder voneinander verschieden, ausgewählt sind aus einem Wasserstoff, einem Halogen, einem Alkyl, einem Alkenyl, einem Alkinyl, einem Aryl, einem Ether, einem Thioether, einer Carbonsäure, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin und einem quartären Ammonium, zum Beispiel -C(CH₃)₂-, -C(CF₃)₂-, -C(=CCI₂)- oder - C(CH₃)(CH₂CH₂COOH)-; -N=N-; -RₐC=CR_{b}-, wobei Rₐ und R_{b} unabhängig voneinander jeweils für einen Wasserstoff oder eine C1-C12-Alkyl-, C1-C12-Alkoxy- oder C6-C18-ArylGruppe stehen; -(CH₂)ₘ- und -(CF₂)m- mit m als ganzer Zahl von 1 bis 6; einer aliphatischen zweiwertigen Gruppe, linear oder verzweigt, mit bis zu 6 Kohlenstoffatomen; und Kombinationen davon.

6. Verfahren nach Anspruch 5, wobei T eine Bindung, - SO₂ oder -C(CH₃)₂- ist.

7. Verfahren nach einem der vorstehenden Ansprüche, wobei das Teilematerial ferner umfasst:
- mindestens ein zusätzliches Polymer und/oder
- zu bis zu 30 Gew.-%, bezogen auf das Gesamtgewicht des Teilematerials, mindestens ein Additiv, das ausgewählt ist aus der Gruppe bestehend aus Füllstoffen, Färbemitteln, Schmiermitteln, Weichmachern, Stabilisatoren, Flammschutzmitteln und Nukleierungsmitteln.

8. Verfahren nach einem der vorstehenden Ansprüche, wobei das PAES ein Poly(biphenylethersulfon) (PPSU) ist.

9. Verfahren nach Anspruch 8 wobei das PPSU die wiederkehrenden Einheiten der Formel (L") umfasst:

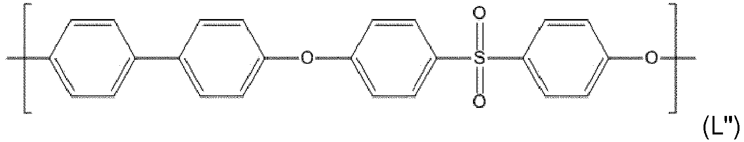

10. Material zum 3D-Drucken zur Verwendung als Abscheidematerial in einem Fused-Filament-Fabrication(FFF)-Drucker in Form eines Filaments mit einem Durchmesser zwischen 1 und 3,5 mm ± 0,15 mm, umfassend:
- mindestens ein Poly(arylethersulfon) (PAES) und
- mindestens ein Per(halogen)fluorpolymer (FP) mit einer Schmelzviskosität von höchstens 1,5 × 10³ Pa.s, gemessen gemäß ASTM D3835 bei 372 °C und 1000 s⁻¹ unter Verwendung einer Hastelloy-Düse von 1 mm × 10 mm.

11. Material nach Anspruch 10, wobei die Polymerkomponente zu mindestens 60 Gew.-% das/die PAES-Polymer(e), bezogen auf das Gesamtgewicht der Polymerkomponente des Materials, umfasst.

12. Material nach einem der Ansprüche 10-11, ferner umfassend zu 0,1 bis 30 Gew.-% ein Additiv, das ausgewählt ist aus der Gruppe bestehend aus Füllstoffen, Färbemitteln, Schmiermitteln, Weichmachern, Flammschutzmitteln, Nukleierungsmitteln, Fließverbesserern und Stabilisatoren.

13. Material nach einem der Ansprüche 10-12, wobei es sich bei dem Per(halogen)fluorpolymer (FP) um ein Polytetrafluorethylen (PTFE) handelt.

14. Material nach einem der Ansprüche 10-13, wobei das Poly(arylethersulfon) ein Poly(biphenylethersulfon) (PPSU) ist.

15. Verwendung eines Teilematerials umfassend mindestens ein Poly(arylethersulfon) (PAES)-Polymer und mindestens ein Per(halogen)fluorpolymer (FP) mit einer Schmelzviskosität von höchstens 1,5 × 103 Pa.s, gemessen gemäß ASTM D3835 bei 372 °C und 1000 s⁻¹ unter Verwendung einer Hastelloy-Düse von 1 mm × 10 mm zur Herstellung von dreidimensionalen (3D) Objekten unter Verwendung eines Additivherstellungssystems auf Basis von Extrusion.

16. Verwendung eines Teilematerials, umfassend mindestens ein Poly(arylethersulfon) (PAES)-Polymer und mindestens ein Per(halogen)fluorpolymer (FP) mit einer Schmelzviskosität von höchstens 1,5 × 103 Pa.s, gemessen gemäß ASTM D3835 bei 372 °C und 1000 s⁻¹ unter Verwendung einer Hastelloy-Düse von 1 mm × 10 mm, zur Herstellung eines Filaments zur Verwendung bei der Herstellung dreidimensionaler Objekte.

## Revendications

1. Procédé pour la fabrication d'un objet tridimensionnel (3D) avec un système de fabrication additive, comprenant une étape consistant en l'impression de couches de l'objet tridimensionnel à partir du matériau de pièce comprenant :
- au moins un polymère de type poly(aryléthersulfone) (PAES), et
- au moins un per(halogène)fluoropolymère (FP), ayant une viscosité à l'état fondu d'au plus 1,5 × 10³ Pa.s, comme mesurée selon la norme ASTM D3835 à 372 °C et 1 000 s⁻¹ en utilisant une matrice Hastelloy de 1 mm × 10 mm.

2. Procédé selon la revendication 1, l'étape d'impression de couches comprenant une extrusion du matériau de pièce.

3. Procédé selon l'une quelconque des revendications précédentes, le matériau de pièce étant sous la forme d'un filament ayant une géométrie cylindrique et un diamètre compris entre 0,5 et 5 mm ± 0,15 mm.

4. Procédé selon l'une quelconque des revendications précédentes, le FP étant un polytétrafluoroéthylène (PTFE) ayant au moins 98 % en moles de motifs répétitifs issus du tétrafluoroéthylène (TFE), sur la base du nombre total de moles dans le FP.

5. Procédé selon l'une quelconque des revendications précédentes, le polymère PAES comprenant au moins 50 % en moles de motifs répétitifs (R_{PAES}) de formule (K), sur la base du nombre total de moles dans le PAES : 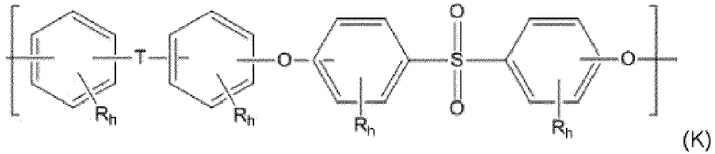 où
- R, en chaque emplacement, est indépendamment choisi parmi un halogène, un alkyle, un alcényle, un alcynyle, un aryle, un éther, un thioéther, un acide carboxylique, un ester, un amide, un imide, un sulfonate de métal alcalin ou alcalino-terreux, un sulfonate d'alkyle, un phosphonate de métal alcalin ou alcalino-terreux, un phosphonate d'alkyle, une amine et un ammonium quaternaire ;
- h, pour chaque R, est indépendamment zéro ou un entier dans la plage de 1 à 4 ; et
- T est choisi dans le groupe constitué par une liaison ; -CH₂-; -O-; -SO₂-; -S-; -C(O)-; un groupe - C(Rj) (Rk)-, où Rj et Rk, égaux ou différents l'un de l'autre, sont choisis parmi un hydrogène, un halogène, un alkyle, un alcényle, un alcynyle, un éther, un thioéther, un acide carboxylique, un ester, un amide, un imide, un sulfonate de métal alcalin ou alcalino-terreux, un sulfonate d'alkyle, un phosphonate de métal alcalin ou alcalino-terreux, un phosphonate d'alkyle, une amine et un ammonium quaternaire, par exemple - C(CH₃)₂-, -C(CF₃)₂-, -C(=CCl₂)- ou-C(CH₃)(CH₂CH₂COOH)- ; -N=N- ; -RₐC=CR_{b}-, où chaque Rₐ et R_{b}, indépendamment l'un de l'autre, est un hydrogène ou un groupe C1-C12-alkyle, C1-C12-alcoxy ou C6-C18-aryle ; -(CH₂)ₘ- et- (CF₂)ₘ-, m étant un entier de 1 à 6 ; un groupe divalent aliphatique, linéaire ou ramifié, de jusqu'à 6 atomes de carbone ; et des combinaisons correspondantes.

6. Procédé selon la revendication 5, T étant une liaison, -SO₂ ou -(CH₃)₂-.

7. Procédé selon l'une quelconque des revendications précédentes, le matériau de pièce comprenant en outre :
- au moins un polymère supplémentaire et/ou
- jusqu'à 30 % en poids, sur la base du poids total du matériau de pièce, d'au moins un additif choisi dans le groupe constitué par des charges, des matières colorantes, des lubrifiants, des plastifiants, des stabilisants, des agents ignifugeants et des agents de nucléation.

8. Procédé selon l'une quelconque des revendications précédentes, le PAES étant une poly(biphényléthersulfone) (PPSU).

9. Procédé selon la revendication 8, la PPSU comprenant les motifs répétitifs de formule (L'') :

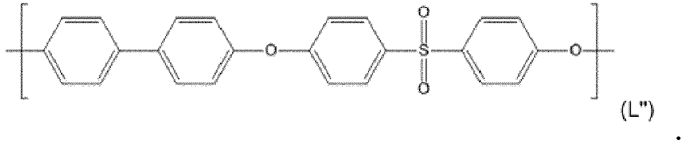

10. Matériau pour une impression 3D pour une utilisation en tant que matériau de dépôt dans une imprimante de fabrication de filaments fondus (FFF), sous la forme d'un filament ayant un diamètre compris entre 1 et 3,5 mm ± 0,15 mm, comprenant :
- au moins une poly(aryléthersulfone) (PAES), et
- au moins un per(halogène)fluoropolymère (FP), ayant une viscosité à l'état fondu d'au plus 1,5 × 10³ Pa.s, comme mesurée selon la norme ASTM D3835 à 372 °C et 1 000 s⁻¹ en utilisant une matrice Hastelloy de 1 mm × 10 mm.

11. Matériau selon la revendication 10, le composant polymérique comprenant au moins 60 % en poids du ou des polymères PAES, sur la base du poids total de composant polymérique du matériau.

12. Matériau selon l'une quelconque des revendications 10 et 11, comprenant en outre de 0,1 à 30 % en poids d'un additif choisi dans le groupe constitué par des charges, des matières colorantes, des lubrifiants, des plastifiants, des agents ignifugeants, des agents de nucléation, des agents d'amélioration de l'écoulement et des stabilisants.

13. Matériau selon l'une quelconque des revendications 10 à 12, le per(halogène)fluoropolymère (FP) étant un polytétrafluoroéthylène (PTFE).

14. Matériau selon l'une quelconque des revendications 10 à 13, la poly(aryléthersulfone) étant une poly(biphényléthersulfone) (PPSU).

15. Utilisation d'un matériau de pièce comprenant au moins une poly(aryléthersulfone) (PAES) et au moins un per(halogéno)fluoropolymère (FP), ayant une viscosité à l'état fondu d'au plus 1,5 × 10³ Pa.s, comme mesurée selon la norme ASTM D3835 à 372 °C et 1 000 s⁻¹ en utilisant une matrice Hastelloy de 1 mm × 10 mm, pour la fabrication d'objets tridimensionnels (3D) en utilisant un système de fabrication additive à base d'extrusion.

16. Utilisation d'un matériau de pièce comprenant au moins une poly(aryléthersulfone) (PAES) et au moins un per(halogéno)fluoropolymère (FP), ayant une viscosité à l'état fondu d'au plus 1,5 × 10³ Pa.s, comme mesurée selon la norme ASTM D3835 à 372 °C et 1 000 s⁻¹ en utilisant une matrice Hastelloy de 1 mm × 10 mm, pour la fabrication d'un filament pour une utilisation dans la fabrication d'objets tridimensionnels.
